# EUROPEAN PATENT APPLICATION

(11) **EP 2 298 943 A1**
(43) Date of publication of application: **23.03.2011**
(21) Application number: 10158034.8
(22) Date of filing: 26.03.2010
(51) Int. Cl.: C22B 7/00, C22B 34/36, C22C 29/00, C25C 5/00, C25C 7/00

(54) **Recycling tungsten carbide**

(30) Priority: 25.08.2009 US 236564 P
(71) Applicant: Kohsei Co. Ltd., Tokyo 103-0024 (JP)
(72) Inventor: Xingbo, Yang, Phoenix, AZ 85043 (US); Xiong, Jie, Fukuoka Fukuoka (JP); Sumi, Toshinari, Ryugasaki-city Ibaraki T301-0837 (JP)
(74) Representative: Casey, Lindsay Joseph

(57) **Abstract**

In the electro-dissolution process for hard alloy recovery, the longitudinal acid flow is replaced by a transversal flow to progress the running quality of electrolyte; a supersonic wave device is set for increasing the reaction speed and preventing the oxidation bed from forming; a supersonic wave cleaner is used for cleaning the impurity ions; grinding process is improved for maintaining the original shape of hard particles (WC, VC, TiC, etc); magnetic separators are used for separating the residual metal binder (Co, Ni, Cr, etc) out of the powders.

## Description

### BACKGROUND OF THE INVENTION

This invention is related to the recovery processing of hard alloy by electro-dissolution, which is used for separating the waste hard alloy into hard powders and metal ion solution in the acid solution.

It is known that typical electro-dissolution process is just suitable for the hard alloy whose binder content is over 15%, because when the binder content is low, the acid has to react with metal binder through the tungsten carbide (WC) layer. For hard alloy whose binder content below 15%, the reaction speed is quite slow, the reaction depth could only be 2mm∼3mm, after that the reaction will stop because the acid is very hard to reach the metal binder with the obstruction of WC layer and oxidation bed.

Moreover, the quality of recovered WC powders is far lower than original powders', as there is always residual metal binder inside, and the impurity ions (Co, Ni, Cr, Ti, Na, Cl, etc) can't be cleaned thoroughly, the particle size will also be easily changed by the grinding process. Thus, typical recovered WC powders can only be used for low grade production, and also be sold at a low price.

### SUMMARY OF THE INVENTION

According to an aspect of the present invention, there is provided a method of recovery of hard material as specified in claim 1. According to another aspect of the present invention, there is provided a method as specified in any of claims 2-8. According to a further aspect of the present invention, there is provided an apparatus for hard material recovery as specified in claim 9. According to a further additional aspect of the present invention, there is provided an apparatus as specified in claim 10.

The present invention makes substantial and significant inroads against the above problems by a method of flowing electrolyte of the electro-dissolution process for a low binder content hard alloy transversely of rather than longitudinally through dissolution cells, preferably augmented by supersonic wave induction in the electrolyte and that is preferably induced uniformly or nearly so in each cell or over the span of an array of cells. The hard alloy is generally used as a cell electrode - generally as anode portion of bipolar electrodes in a cell array (but also usable as end anode). Conductive cores or substrates (e.g. copper, aluminum or titanium foils or screens) are incorporated into or attached to the hard alloy electrodes. The electro-dissolution is substantially enhanced and produces the original particle components liberated from metal binder, generally as a porous flake form. The solid materials are rinsed and dried and separate using known per se methods and equipment, e.g. magnetic separator. The particles (flakes) are then milled (e.g. in a wet ball miller with alcohol carrier/lubricant) to specification powder size ranges and morphology and the liquid carrier is recovered. Conditions of drying do not cause significant rebonding by product powders. In addition to more thorough binder removal at high speeds, the process minimizes impurities in recovered hard alloy powders and the recovered particles are equivalent to virgin particles for subsequent reuse.

As used herein "hard alloy" includes compounds and alloyed mixtures such as refractory metal carbides, nitrides, borides, and silicides. Binders are generally metals, but could be other materials used in diverse applications of the hard alloy materials to effect consolidation that hold up under conditions of usage complementing self bonding of hard alloy particles. "Low" binder content means such low content of binder (and inversely, such high consolidated hard alloy content) that chemical or electrochemical dissolution is limited to thin surface layers of consolidated powder metallurgy articles.

Other objects, features and advantages of the invention will be apparent from the following detailed description of preferred embodiments taken in connection with the accompanying drawing, in which:

### BRIEF DESCRIPTION OF THE DRAWINGS

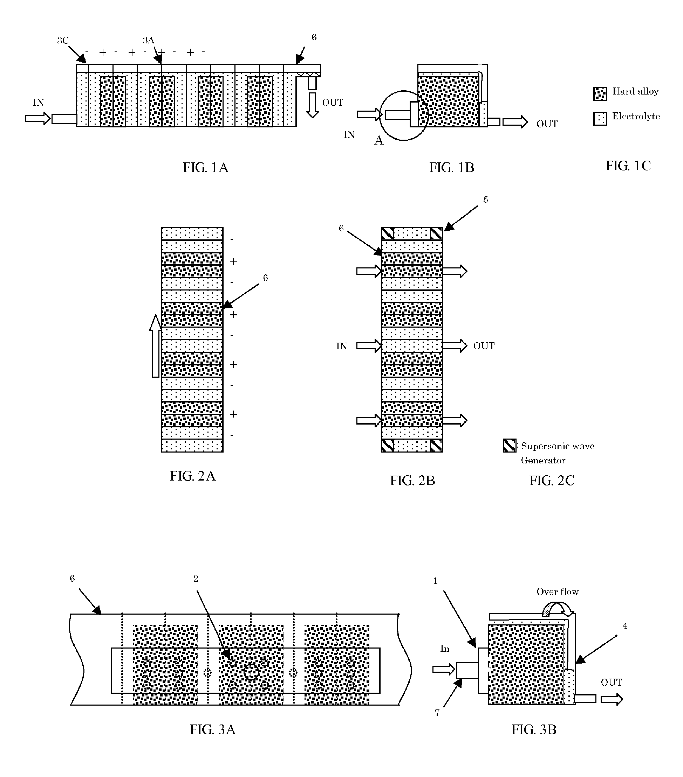

FIGS. 1A, 2A, show side and top view of a typical prior art electro dissolution tank and FIGS. 1B and 2B are similar views of an electro-dissolution tank of a preferred embodiment of the invention -- in both cases of about three meters length and particularly for the invention about half a meter transverse span and Fig. 1C shows shading convention for hard alloy composite use as anode electrodes (about 18-20 for example in a three meter long tank) and Fig. 2C shows shading convention for a supersonic wave generator component; and

FIGS. 3A and 3B show side and end view of a the tank of the preferred embodiment of apparatus illustrating transverse flow inlets with a common dispersion box and a plenum form overflow exit system

### DETAILED DESCRIPTION OF PREFERRED EMBODIMENTS

According to an embodiment of the invention, the longitudinal acid flow of typical electro-dissolution process is replaced by a transversal flow (shown in FIG 1). As showed in FIGS. 1 and 2, three dispersion boxes 1 are set for making the acid get through the hard alloy blocks evenly. In the dispersion box, there are many holes 2 (Φ10mm) on the tank board, distributing on the two sides of anode (Hard alloy blocks). The over flow box is set for collecting the over-flow acid and sending it to the recycling tank. Four supersonic wave generators 5 are set on the four corners of the electrolytic tank 6.

The longitudinal acid flow is replaced by a transversal flow to progress the running quality of electrolyte, so that the concentration polarization of the acid can be decreased, furthermore, with the assistance of the supersonic wave, the acid can rapidly get through the WC layer, and react with metal binder, it can also prevent the oxidation bed from forming. For the hard alloy of 10% by weight of binder content, 5% by weight of tungsten carbide (WC) powders can only be made by the typical electro-dissolution process within one circulate, and according to the invention, with the transversal flow, the WC powders increased to 15%. With the assistance of supersonic wave, the number could reach 20%.

A supersonic wave cleaner is used for cleaning the WC flakes and unreacted hard alloy blocks.

It is known that the electrolyte is HCl solution, and the chlorine (Cl-) ions can be quite harmful to the hard alloy, i.e. corrode the binder. Other impurities as Co, Ni, Cr, Ti, Na, etc. will decrease the grade of the WC powders, thus, it's necessary to get a better way for cleaning the WC flakes. Without the assistance of the supersonic wave cleaner, after cleaning the flakes for 3 times by pure water, the Cl content is about 700ppm. After cleaning for 20 minutes by supersonic wave cleaner, the Cl content could get below 5ppm.

A hot-air blast dryer is used for drying the WC flakes. The hot-air blast dryer has a high efficiency for drying all kinds of materials. With adjusting the most suitable situation of temperature and time, WC flakes could be dried thoroughly within 3 hours, and also keep low oxidation content.

A roll-type magnetic separator is used for separate the flakes with unreacted metal binder inside from the WC flakes. The roll-type magnetic separator has a high efficiency for separating relatively big size materials (below 3mm diameter). With the magnetic separating by the separator, most of the big size WC flakes with unreacted metal binder is separated and sent back to the electrolytic tank.

The wet ball miller is used for grinding the WC flakes into WC powders which are almost the same particle shape and size distribution as original WC powders. Alcohol is used for the ball miller's mediator. Comparing to the dry ball miller, wet ball miller has an average power for crashing the WC flake, so that the size distribution of WC powders could be narrow. With adjusting the ball miller's parameters into the suitable situation for WC flake grinding, the particle shape and size distribution of recovered WC powders can reach the same grade of original WC powders.

A vacuum vibration dryer is used to evaporate the alcohol and recover it. After being drying by the vacuum vibration dryer thoroughly, the WC powders won't change the shape and it's also hard to make secondary bonding.

The thus recovered WC powders can be used in later consolidation or other manufacturing operations as if virgin WC powders.

Similar processing can be used and similar benefits realized in using the invention for recovery of other powers including metal carbides, borides, nitrides and silicides.

It will be apparent to those skilled in the art that other embodiments, improvements, details, and uses can be made consistent with the letter and spirit of the foregoing disclosure and within the scope of this patent, which is limited only by the following claims, construed in accordance with the patent law, including the doctrine of equivalents.

## Claims

1. Method of recovery of hard material from alloy composites of under 15 w/o% binder content comprising electro-dissolution of the composite conducted by placing the composites longitudinally in an elongated bath with transverse in and out flow of liquid electrolyte across the elongated bath and generating current through the electrolyte to liberate the hard material in a flake form.

2. The method of claim 1 further comprising application of supersonic wave energy to the electrolyte.

3. The method of either of claims 1 or 2 comprising rinsing the flakes and application of hot air to dry the flakes.

4. The method of any of claims 1-3 and further comprising separation of the flakes from unreacted binder therein.

5. The method of claim 4 wherein the separation is a magnetic separation.

6. The method of any of claims 1-5 comprising processing the flakes to suitable size and form for re-use in powder metallurgy reaction of hard material particles.

7. The method of any of claims 1-6 wherein the hard material is selected from the class consisting of metal carbides, borides, nitride and silicides.

8. The method of claim 7 wherein the hard material is tungsten carbide.

9. Apparatus for hard material recovery from hard material binder alloy composites comprising an electrolytic tank of elongated form for placement of blocks of the hard material and conducting an electrolytic dissolution via flowing electrolyte liquid in the bath, the structure being constructed to pass the electrolyte through the tank transverse to its elongated direction at multiple points along the tank's length.

10. The apparatus of claim 9 further comprising sonic generating means constructed and arranged to effect sonic waves in the electrolyte.
